# FASCICULE DE BREVET EUROPEEN

(11) **EP 3 770 698 B1**
(45) Date de publication et mention de la délivrance du brevet: **12.03.2025**
(21) Numéro de dépôt: 19188642.3
(22) Date de dépôt: 26.07.2019
(51) Int. Cl.: G04B 31/06, B23K 26/0622, B23K 26/382, G04D 3/00, B23K 103/00

(54) **PIERRE MINÉRALE DE TYPE MONOCRISTALLINE MUNIE D'UN CONE DE RECENTRAGE D'UN PIVOT, ET SON PROCÉDÉ DE FABRICATION**
MINERALSTEIN VOM MONOKRISTALLINEN TYP MIT EINEM KEGEL ZUR NEUZENTRIERUNG EINES ZAPFENS, UND SEIN HERSTELLUNGSVERFAHREN
MONOCRYSTALLINE TYPE MINERAL STONE PROVIDED WITH A PIVOT RECENTRING CONE, AND METHOD FOR MANUFACTURING SAME

(43) Date de publication de la demande: 27.01.2021
(73) Titulaire: Comadur SA, 2400 Le Locle (CH)
(72) Inventeur: BESUTTI, Bruno, 25140 Charquemont (FR); RETROUVEY, Sébastien, 39380 Chissey sur Loue (FR); VUILLE, Pierry, 2338 Les Emibois (CH)
(74) Mandataire: ICB SA

(56) Documents cités:
- EP-A1- 3 367 182
- US-A- 5 043 553
- US-A1- 2013 175 243
- KEMNITZER MATTHIAS ET AL: "Next-generation of high-power, sub-300 fs lasers with >100 W for industrial applications", 2017 CONFERENCE ON LASERS AND ELECTRO-OPTICS EUROPE & EUROPEAN QUANTUM ELECTRONICS CONFERENCE (CLEO/EUROPE-EQEC), IEEE, 25 June 2017 (2017-06-25), pages 1, XP033239695, DOI: 10.1109/CLEOE-EQEC.2017.8086768

## Description

### Domaine de l'invention

L'invention porte sur une pierre percée munie d'un cône de recentrage d'un pivot, notamment pour un mouvement d'horlogerie
L'invention porte aussi sur un procédé de fabrication d'une telle pierre percée.

L'invention porte également sur un mouvement d'horlogerie comportant une telle pierre percée.

### Arrière-plan de l'invention

Dans l'état de la technique de l'horlogerie, les pierres de type rubis ou saphir, sont notamment utilisées pour former des contre-pivots ou des éléments de guidage, appelés coussinets. Ces contre-pivots et éléments de guidage sont destinés à entrer en contact avec des pivots afin de rendre ces derniers mobiles en rotation et ce, avec un frottement minimal. Ainsi, ils forment, par exemple, tout ou partie d'un palier d'un axe monté en rotation.

En principe, on utilise des pierres synthétiques dans les mouvements horlogers. On connait en particulier le procédé de type Verneuil pour fabriquer des pierres de type monocristalline. Il existe aussi les pierres de type poly-cristalline, que l'on fabrique par pressage d'un précurseur en vue de l'obtention d'un corps vert de la future pierre à partir d'un outil de pressage. Les pierres sont ensuite usinées pour obtenir une forme finie aux dimensions désirées.

Les pierres servant d'élément de guidage en rotation d'un pivot ont généralement un trou traversant dans lequel le pivot est inséré pour prendre appui sur un contre-pivot. Il est connu de former une creusure sensiblement hémisphérique autour du trou sur la face d'insertion du pivot pour faciliter l'insertion du pivot. En outre, il permet de remettre le pivot en place au cas où ce dernier sortirai à cause d'un choc. La creusure est, par exemple, obtenue par tournage avec un burin diamanté.

Cependant la creusure, obtenue avec un tel procédé, a une arête saillante au bord du trou, de sorte que le pivot peut être abîmé par ladite arête, et réciproquement, par exemple sous l'effet d'un choc, si le pivot sort du trou et rentre à nouveau.

Pour éviter cela, il est connu de remplacer la creusure par un cône dont l'angle est plus petit, de sorte que l'arête est moins saillante. Ainsi, on évite l'usure du pivot en particulier.

Concernant les éléments de guidage en pierre polycristalline, l'outil de pressage est par exemple pourvu d'une forme de cône et d'un fil participant à l'édification d'une ébauche de trou muni d'un cône à son entrée.

Les pierres de type monocristallines sont d'abord percées au laser pour obtenir l'ébauche de trou. La dimension finale du trou est obtenue par la suite grâce à l'usinage d'un burin diamanté. Cependant, on ne sait pas faire de cône dans une pierre de type monocristalline, car l'usinage classique ne permet pas d'obtenir une telle forme.

Le document US 2013/0175243 A1 concerne un dispositifs d'ablation laser comprenant un système de manipulation du faisceau laser dans lequel un miroir peut être déplacé le long de la direction du faisceau laser entrant, un système de rotation du faisceau laser, et un système de compensation comprenant des éléments optiques de déplacement du faisceau laser pouvant tourner de manière fixe l'une par rapport à l'autre.

### Résumé de l'invention

Le but de la présente invention est de palier tout ou partie les inconvénients cités précédemment, en proposant un procédé de fabrication de fabrication d'une pierre synthétique pour une pièce d'horlogerie, à partir d'un corps minéral de type monocristallin, la pierre comprenant un trou.

A cet effet, le procédé est remarquable en ce qu'il comprend une étape d'ablation dans laquelle le corps est soumis à une ablation de matière par balayage sur au moins une face du corps d'un rayonnement laser à impulsions ultra-courtes dont la durée est inférieure à cent picosecondes, et dont le rayon est guidé par un système à précession d'au moins trois axes configuré pour annuler au moins en partie l'angle conique de focalisation dudit laser, l'étape d'ablation laser comprenant le creusement d'un cône d'entrée du trou traversant.

Grâce à ce procédé, il est possible d'enlever de la matière à la pierre de façon extrêmement précise, et ainsi d'obtenir des formes et des surfaces impossibles à former avec des méthodes laser connues de l'état de l'art. Un tel dispositif permet de focaliser le rayon laser avec une grande précision, tour en annulant au moins en partie l'angle conique formé par le rayon laser, et qui est dû à la focalisation dudit laser. En effet, la focalisation engendre un laser en forme de cône, qui ne permet pas d'avoir un diamètre de rayon identique sur toute la hauteur au point de localisation du laser, de sorte que l'ablation de matière n'est pas. Le système permet d'annuler l'angle du cône sur au moins un côté du rayon, ce qui permet notamment d'obtenir des coupes droites. Ces coupes droites ne peuvent être obtenues avec des lasers de découpe classiques.

Ainsi, on peut obtenir un cône d'entré du trou dans un corps de type monocristallin, ce qui n'était pas possible avec d'autres systèmes. En particulier, un tel cône est utile pour un pivot d'un axe amagnétique, qui est plus mou. En effet, la combinaison d'un tel axe avec une pierre de type monocristalline est déformable sous l'effet d'un choc, de sorte qu'il est absorbé par l'axe.

De plus, les impulsions ultra-courtes du laser permettent d'éviter un échauffement thermique de la pierre, qui nuisent à la qualité de la pierre.

En outre, l'état de surface Ra de la pierre obtenue avec le procédé selon l'invention est de l'ordre de 0.1, ce qui permet ensuite de polir la pierre avec des moyens conventionnels de polissage. Ainsi, ce procédé apporte des avantages importants tout en gardant une mise en œuvre sans grande complexité.

Selon un mode de réalisation particulier de l'invention, le cône obtenu lors de l'étape d'ablation a un angle compris dans un intervalle allant de 30° à 120°, de préférence de 45° à 90°.

Selon un mode de réalisation particulier de l'invention, l'ablation est effectuée couche par couche, chaque couche ayant une épaisseur comprise dans un intervalle allant de 1 à 10µm, de préférence de 2 à 4µm.

Selon un mode de réalisation particulier de l'invention, les impulsions ont une durée comprise dans un intervalle allant de 200 à 400 fs, de préférence dans un intervalle allant de 50 à 350 fs, voire de 80 à 100 fs.

Selon un mode de réalisation particulier de l'invention, le laser a une longueur d'onde comprise dans un intervalle allant de 400 à 600nm, de préférence entre 450 et 550nm, voire de 500nm.

Selon un mode de réalisation particulier de l'invention, le corps minéral comprend du Al₂O₃.

Selon un mode de réalisation particulier de l'invention, le procédé comprend une étape préalable de fabrication du corps par un procédé de type Verneuil.

Selon un mode de réalisation particulier de l'invention, le procédé comprend une étape supplémentaire de finition, par exemple un rodage et/ou un brossage et/ou un polissage du corps minéral après l'étape laser, en particulier sur les zones d'ablation.

Selon un mode de réalisation particulier de l'invention, l'étape d'ablation laser comprend le creusement du trou, le trou étant de préférence traversant entre une face inferieure et une face supérieure de la pierre.

L'invention porte également sur une pierre minérale synthétique de type monocristallin, pour une pièce d'horlogerie, ladite pierre comportant une face pourvue d'un trou formé dans le corps de la pierre et d'un élément fonctionnel à l'entrée du trou. La pierre est remarquable en ce que l'élément fonctionnel a une forme de cône.

Selon un mode de réalisation particulier de l'invention, la pierre comprend une face supérieure et une face inférieure, la face inférieure comportant le cône

Selon un mode de réalisation particulier de l'invention, le trou est traversant de manière à relier ledit cône à la face supérieure de ladite pierre.

Selon un mode de réalisation particulier de l'invention, ladite pierre comprend du Al₂O₃.

Enfin, l'invention porte également sur une pièce d'horlogerie comprenant une telle pierre, notamment pour un palier amortisseur.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est un schéma synoptique de la réalisation d'une pierre selon le procédé de l'invention ;
- la figure 2 est une représentation schématique d'une pierre obtenue après l'étape d'ablation laser grâce au procédé selon l'invention ;
- la figure 3 est une représentation schématique d'un ensemble comprenant une pierre de la figure 2 et d'un axe muni d'un pivot.

### Description détaillée des modes de réalisation préférés

Comme expliqué ci-dessus, l'invention se rapporte à un procédé de fabrication d'une pierre susceptible de former un élément de guidage d'une pièce d'horlogerie. La pierre est par exemple destinée à entrer en contact avec un pivot afin de rendre ce dernier mobile en rotation avec un frottement minimal. On comprend donc que la présente invention permet notamment de réaliser une pierre pouvant former tout ou partie d'un palier d'un axe monté en rotation.

La pierre est formée à partir d'un corps minéral de type monocristallin. Le corps comprend par exemple du AL2O3.

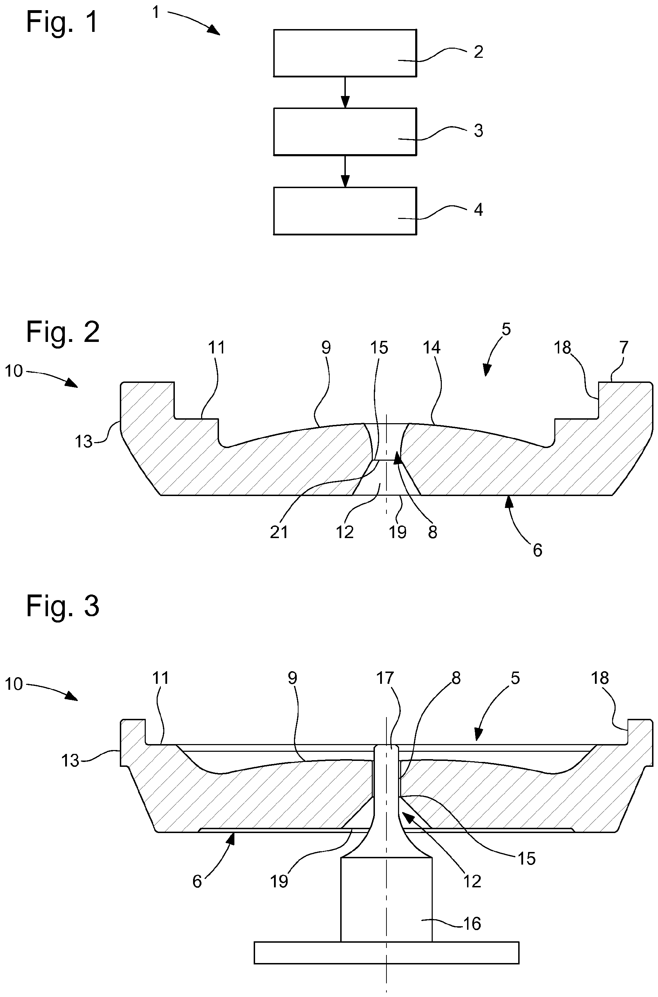

Le procédé 1, représenté sur la figure 1, comprend une première étape 2 de fabrication du corps minéral cristallin par un procédé de type Verneuil, qui est bien connu dans le domaine de l'horlogerie. Le matériau est formé à partir d'une poudre fondue par un chalumeau oxhydrique à plus de 2000°C. Le corps se cristallise après refroidissement en dessous du point de fusion. Le corps est dimensionné de manière à obtenir des dimensions proches de celles souhaitées, notamment pour faciliter son usinage futur. Cette étape fournit un corps monobloc monocristallin.

Selon l'invention, le procédé comprend une deuxième étape d'ablation laser 3 afin de former un cône d'entrée d'un trou de la pierre. Lors de l'étape d'ablation laser 3, le corps est soumis à une ablation de matière par balayage sur au moins une face du corps d'un rayonnement laser à impulsions ultra-courtes dont la durée est inférieure à cent picosecondes, et dont le rayon est guidé par un système à précession d'au moins trois axes configuré pour annuler l'angle conique du laser dû à la focalisation dudit laser. Un tel dispositif est par exemple décrit dans le document WO 2017029210. Il existe différents types de dispositifs permettant d'annuler au moins en partie l'angle conique du laser. Certains dispositifs utilisent un système de précession à cinq ou six axes.

Ainsi, le rayon laser a au moins un bord sensiblement droit, de sorte que ces dispositifs permettent de creuser la surface de la pierre et lui donner une forme spécifique de cône à l'entrée du trou d'un corps minéral monocristallin. Grâce à ce cône, si le pivot sort du trou à cause d'un choc, le pivot retourne dans le trou sans être abîmé par l'arête du bord du trou. Un tel cône facilite l'insertion d'un pivot dans le trou, et évite le risque d'usure du pivot en cas de choc. L'arête d'un cône étant moins saillante, le risque d'usure est largement diminué. On choisit par exemple un angle compris entre 30° et 120°, de préférence compris entre 45° et 90°.

L'ablation est effectuée couche par couche, le laser balayant une zone du corps pour le creuser. Chaque couche a, par exemple, une épaisseur comprise dans un intervalle allant de 1 à 10µm, de préférence de 2 à 4µm. On enlève de la matière couche par couche jusqu'à obtenir la forme souhaitée.

Le laser a par exemple une longueur d'onde comprise entre 400 et 600nm, de préférence entre 450 et 550nm, voire de l'ordre de 500nm. La durée de la pulsation est inférieure à la picoseconde, par exemple comprise dans un intervalle allant de 200 à 400 fs, de préférence dans un intervalle allant de 50 à 350 fs, voire de 80 à 100 fs. De telles caractéristiques permettent de creuser le corps sans nuire aux propriétés du matériau formant la pierre.

Il est aussi possible de creuser le trou dans la pierre. Cette étape de procédé permet de percer le trou directement à la bonne dimension, sans avoir à passer par une ébauche, puis une étape d'usinage pour que le trou ait des dimensions exactes et homogènes sur toute la hauteur du trou.

Enfin, une troisième étape de finition 4 permet de donner à la pierre un état de surface compatible avec son utilisation. On cherche par exemple à obtenir un état de surface Ra=0.05µm. Une telle étape de finition peut ainsi comporter un rodage et/ou un brossage et/ou un polissage permettant l'ajustage des cotes finales et/ou le retrait d'arêtes et/ou la modification locale de la rugosité.

Telle que représentée sur les figures 2 et 3, l'invention porte également sur une pierre 10, susceptible d'être obtenue par le procédé décrit précédemment, la pierre formant par exemple un élément de guidage destiné à être monté dans un palier amortisseur d'une pièce d'horlogerie. Toutefois, une telle pierre ne saurait se limiter au domaine horloger et peut s'appliquer à tout élément monté mobile par rapport à un palier. La pierre 10 comprend les caractéristiques décrites dans le procédé précédemment. En particulier, elle est formée d'un matériau minéral monocristallin, comprenant par exemple du ALO3.

Avantageusement, la pierre 10 est traversée par un trou 8 destiné à recevoir un pivot 17, également appelé tourillon. La pierre comporte, une face supérieure 5 et une face inférieure 6 dont l'une comprend un cône 12 communiquant avec le trou traversant 8. Autrement dit, le trou 8 communique avec la face supérieure 5 et avec aussi un évidement sensiblement conique défini dans la face inférieure 6. Cet évidement forme alors un cône d'engagement de la pierre percée 2. Le cône 12 est de préférence cylindrique. Le cône 12 a une première ouverture 19 à sa base et une deuxième ouverture 21 à son sommet. La première ouverture 19 est plus grande que la deuxième 21, et est formée dans la face inférieure 6 de la pierre 10. La liaison du cône 12 et du trou 8 s'effectue par la deuxième ouverture 21 pour former une arête 15.

Ainsi, l'évasement du cône 12 permet d'insérer facilement le pivot 17 de l'axe 16 d'une pièce mobile en rotation, notamment en cas de choc. L'angle du cône est choisi pour éviter que l'arête 15 formée par le haut du cône et le trou 8 ne soit trop saillante. On choisit par exemple un angle compris entre 30° et 120°, de préférence compris entre 45° et 90°.

On remarque également qu'une paroi interne du corps de cette pierre 10 définie au niveau du trou 8 comporte une zone arrondie destinée à minimiser le contact avec le pivot mais également à faciliter une éventuelle lubrification. On notera que la minimisation du contact avec le pivot permet notamment de diminuer les frottements avec le pivot.

La face supérieure 5 de la pierre comprend un rebord 7, notamment pour enserrer latéralement un contre-pivot dans le cas d'un palier. Le rebord 7 est de préférence périphérique, c'est-à-dire qu'il délimite le bord de la face supérieure 5 de la pierre 10. De plus, il définit une zone interne 9 de la face supérieure 5 comportant une face d'appui 11 et la sortie du trou débouchant 8, et une zone 14 convexe concentriquement depuis la face d'appui 11 jusqu'au trou 8.

Une face supérieure 5 avec un tel rebord 7 permet par exemple de bloquer latéralement un élément agencé sur la face supérieure de la pierre 10. Dans le cas d'un palier pour un axe balancier, dans lequel la pierre 10 sert d'élément de guidage, on peut disposer une pierre contre-pivot de telle sorte qu'elle soit bloquée latéralement par le côté interne 18 du rebord 7 tout en reposant sur la face d'appui 11. La pierre contre-pivot est dimensionnée pour correspondre à la zone 9 de la pierre ayant subi l'ablation laser. La pierre forme ainsi un support axial et radial d'un contre-pivot. Le contre-pivot, non représenté sur les figures peut être emboîté dans la pierre 10 pour le supporter axialement et le maintenir latéralement.

En outre, la pierre 10 a une face périphérique 13 en partie évasée reliant la face inférieure 6 de plus petite surface à la face supérieure 5 de plus grande surface.

Bien entendu, la présente invention est définie par les revendications indépendantes du jeu de revendications annexé. Ainsi, des types d'éléments fonctionnels formés par lors de l'étape d'ablation laser, et différents de celui de l'exemple illustré, peuvent être envisagés avantageusement selon l'invention.

## Revendications

1. Procédé (1) de fabrication d'une pierre synthétique (10) pour une pièce d'horlogerie, à partir d'un corps minéral de type monocristallin, la pierre (10) comprenant un trou (8), ledit procédé comprenant une étape d'ablation (3) dans laquelle le corps est soumis à une ablation de matière par balayage sur au moins une face du corps d'un rayonnement laser à impulsions ultra-courtes dont la durée est inférieure à cent picosecondes, et dont le rayon est guidé par un système à précession d'au moins trois axes configuré pour annuler au moins en partie l'angle conique de focalisation dudit laser, l'étape d'ablation laser comprenant le creusement d'un cône (12) d'entrée du trou (8).

2. Procédé selon la revendication 1, **caractérisé en ce que** le cône (12) obtenu lors de l'étape d'ablation (3) a un angle compris dans un intervalle allant de 30° à 120°, de préférence de 45° à 90°.

3. Procédé selon la revendication 1 ou 2, **caractérisé en ce que** l'ablation (3) est effectuée couche par couche, chaque couche ayant une épaisseur comprise dans un intervalle allant de 1 à 10 µm, de préférence de 2 à 4 µm.

4. Procédé selon l'une, quelconque, des revendications précédentes, **caractérisé en ce que** les impulsions ont une durée comprise dans un intervalle allant de 200 à 400 fs, de préférence dans un intervalle allant de 50 à 350 fs, voire de 80 à 100 fs.

5. Procédé selon l'une, quelconque, des revendications précédentes, **caractérisé en ce que** le laser a une longueur d'onde comprise dans un intervalle allant de 400 à 600 nm, de préférence entre 450 et 550nm, voire de 500 nm.

6. Procédé selon l'une, quelconque, des revendications précédentes, **caractérisé en ce que** le corps minéral comprend du Al₂O₃.

7. Procédé selon l'une, quelconque, des revendications précédentes, **caractérisé en ce qu'**il comprend une étape préalable de fabrication (2) du corps par un procédé de type Verneuil.

8. Procédé selon l'une, quelconque, des revendications précédentes, **caractérisé en ce que** le procédé (1, 5) comprend une étape supplémentaire de finition (4, 12), par exemple un rodage et/ou un brossage et/ou un polissage du corps minéral après l'étape laser, en particulier sur les zones d'ablation.

9. Procédé selon l'une, quelconque, des revendications précédentes, **caractérisé en ce que** l'étape d'ablation laser (3, 11) comprend le creusement du trou (8), le trou étant de préférence traversant entre une face inferieure (6) et une face supérieure (5) de la pierre (10).

10. Pierre minérale synthétique de type monocristallin pour une pièce d'horlogerie, ladite pierre comportant une face (6) pourvue d'un trou (8) formé dans le corps de la pierre (10) et d'un élément fonctionnel à l'entrée du trou (10), l'élément fonctionnel ayant une forme de cône (12).

11. Pierre minérale selon la revendication 10, **caractérisée en ce qu'**elle comprend une face supérieure (5) et une face inférieure (6), la face inférieure (6) comportant le cône (12).

12. Pierre minérale selon la revendication 10 ou 11, **caractérisée en ce que** le trou (8) est traversant de manière à relier ledit cône (12) à la face supérieure (5) de ladite pierre (10).

13. Pierre selon l'une, quelconque, des revendications 10 à 12, **caractérisée en ce qu'**elle comprend du Al₂O₃.

14. Pièce d'horlogerie, comprenant une pierre (10) selon l'une, quelconque, des revendications 10 à 13, notamment pour un palier amortisseur.

## Patentansprüche

1. Verfahren (1) zum Herstellen eines synthetischen Steins (10) für eine Uhr aus einem Mineralkörper monokristalliner Art, wobei der Stein (10) ein Loch (8) umfasst, wobei das Verfahren einen Schritt des Abtragens (3) umfasst, bei dem der Körper auf mindestens einer Seite des Körpers einer Materialabtragung durch Abtastung mit einer ultrakurzen Impulslaserstrahlung unterzogen wird, deren Dauer weniger als hundert Pikosekunden beträgt und deren Strahl durch ein Präzessionssystem mit mindestens drei Achsen geführt wird, das dazu konfiguriert ist, den konischen Fokussierungswinkel des Lasers mindestens teilweise aufzuheben, wobei der Schritt der Laserabtragung das Aushöhlen eines Eintrittskonus (12) für den Strahl (8) umfasst.

2. Verfahren nach Anspruch 1, **dadurch gekennzeichnet, dass** der beim Schritt des Abtragens (3) erhaltene Konus (12) einen Winkel aufweist, der in einem Bereich von 30° bis 120°, vorzugsweise 45° bis 90°, liegt.

3. Verfahren nach Anspruch 1 oder 2, **dadurch gekennzeichnet, dass** die Abtragung (3) Schicht für Schicht durchgeführt wird, wobei jede Schicht eine Dicke aufweist, die in einem Bereich von 1 bis 10 µm, vorzugsweise 2 bis 4 µm, liegt.

4. Verfahren nach einem der vorhergehenden Ansprüche, **dadurch gekennzeichnet, dass** die Impulse eine Dauer aufweisen, die in einem Bereich von 200 bis 400 fs, vorzugsweise in einem Bereich von 50 bis 350 fs oder sogar 80 bis 100 fs liegt.

5. Verfahren nach einem der vorhergehenden Ansprüche, **dadurch gekennzeichnet, dass** der Laser eine Wellenlänge aufweist, die in einem Bereich von 400 bis 600 nm, vorzugsweise zwischen 450 und 550 nm oder sogar bei 500 nm liegt.

6. Verfahren nach einem der vorhergehenden Ansprüche, **dadurch gekennzeichnet, dass** der Mineralkörper Al₂O₃ umfasst.

7. Verfahren nach einem der vorhergehenden Ansprüche, **dadurch gekennzeichnet, dass** es ferner einen vorherigen Schritt des Herstellens (2) des Körpers durch ein Verneuil-Verfahren umfasst.

8. Verfahren nach einem der vorhergehenden Ansprüche, **dadurch gekennzeichnet, dass** das Verfahren (1, 5) einen zusätzlichen Schritt der Fertigstellung (4, 12), zum Beispiel durch Läppen und/oder Bürsten und/oder Polieren des Mineralkörpers nach dem Laserschritt, insbesondere in den abgetragenen Bereichen umfasst.

9. Verfahren nach einem der vorhergehenden Ansprüche, **dadurch gekennzeichnet, dass** der Schritt der Laserabtragung (3, 11) das Aushöhlen des Lochs (8) umfasst, wobei das Loch vorzugsweise durchgehend zwischen einer unteren Fläche (6) und einer oberen Fläche (5) des Steins (10) ist.

10. Synthetischer Mineralstein monokristalliner Art für eine Uhr, wobei der Stein eine Fläche (6) enthält, die mit einem Loch (8), das im Körper des Steins (10) ausgebildet ist, und einem Funktionselement am Eingang zum Loch (10) versehen ist, wobei das Funktionselement die Form eines Konus (12) aufweist.

11. Mineralstein nach Anspruch 10, **dadurch gekennzeichnet, dass** er eine obere Fläche (5) und eine untere Fläche (6) umfasst, wobei die untere Fläche (6) den Konus (12) enthält.

12. Mineralstein nach Anspruch 10 oder 11, **dadurch gekennzeichnet, dass** das Loch (8) durchgehend ist, um den Konus (12) mit der oberen Fläche (5) des Steins (10) zu verbinden.

13. Mineralstein nach einem der Ansprüche 10 bis 12, **dadurch gekennzeichnet, dass** er Al₂O₃ umfasst.

14. Uhr, die einen Stein (10) nach einem der Ansprüche 10 bis 13 insbesondere für ein Stoßdämpferlager umfasst.

## Claims

1. Method (1) for manufacturing a synthetic stone (10) for a timepiece from a mineral body of monocrystalline type, the stone (10) comprising a hole (8), said method comprising an ablation step (3) in which the body is subjected to the ablation of material by scanning at least one face of the body with ultra-short pulse laser radiation for a duration of less than one hundred picoseconds, and the ray of which is guided by precession system of at least three axes configured to at least partially cancel the conical focusing angle of said laser, the laser ablation step comprising the recessing of an entrance cone (12) of the hole (8).

2. Method according to claim 1, **characterized in that** the cone (12) obtained during the ablation step (3) has an angle in an interval ranging from 30° to 120°, preferably from 45° to 90°.

3. Method according to claim 1 or 2, **characterized in that** the ablation (3) is carried out layer by layer, each layer having a thickness in an interval ranging from 1 to 10 µm, preferably from 2 to 4 µm.

4. Method according to any one of the preceding claims, **characterized in that** the pulses have a duration in an interval ranging from 200 to 400 fs, preferably in an interval ranging from 50 to 350 fs, even from 80 to 100 fs.

5. Method according to any one of the preceding claims, **characterized in that** the laser has a wavelength in an interval ranging from 400 to 600 nm, preferably between 450 and 550 nm, even 500 nm.

6. Method according to any one of the preceding claims, **characterized in that** the mineral body comprises Al₂O₃.

7. Method according to any one of the preceding claims, **characterized in that** it comprises a prior step of manufacturing (2) the body using a Verneuil-type method.

8. Method according to any one of the preceding claims, **characterized in that** the method (1, 5) comprises an additional finishing step (4, 12), for example lapping and/or brushing and/or polishing the mineral body after the laser step, in particular on the ablation areas.

9. Method according to any one of the preceding claims, **characterized in that** the laser ablation step (3, 11) comprises recessing the hole (8), the hole being preferably a through-hole between a lower face (6) and an upper face (5) of the stone (10).

10. Synthetic mineral stone of monocrystalline type for a timepiece, said stone including a face (6) provided with a hole (8) formed in the body of the stone (10) and a functional element at the entrance of the hole (10), the functional element having the shape of a cone (12).

11. Mineral stone according to claim 10, **characterized in that** it comprises an upper face (5) and a lower face (6), the lower face (6) including the cone (12).

12. Mineral stone according to claim 10 or 11, **characterized in that** the hole (8) is a through-hole, so as to connect said cone (12) to the upper face (5) of said stone (10).

13. Stone according to any one of claims 10 to 12, **characterized in that** it comprises Al₂O₃.

14. Timepiece, comprising a stone (10) according to any one of claims 10 to 13, in particular for a shock-absorbing bearing.
